# EUROPEAN PATENT APPLICATION

(11) **EP 2 975 853 A1**
(43) Date of publication of application: **20.01.2016**
(21) Application number: 14177218.6
(22) Date of filing: 16.07.2014
(51) Int. Cl.: H04N 21/462, H04N 5/50, H04N 21/482, H04N 21/438

(54) **Device and method for receiving satellite channels**

(71) Applicant: TP Vision Holding B.V., 1097 JB Amsterdam (NL)
(72) Inventor: Kasala Shanmugasundaram, Hemakumar, 560045 Nagawara, Bangalore (IN); Srinivasan, Krishna Prasad, 560045 Nagawara, Bangalore (IN)
(74) Representative: DREISS Patentanwälte PartG mbB

(57) **Abstract**

The device (1) for receiving satellite channels of the invention comprises a receiver (3) for tuning to a satellite channel, an interface (5) for exchanging data with a further device (21) and a processor (7). The processor (7) uses the receiver (3) to scan transponders of at least one satellite for first channels with the help of transponder information and inserts the first channels in a default channel list. The processor (7) further uses the receiver (3) to scan transponders of the at least one satellite for second channels without the help of transponder information and inserts the second channels in a second channel list and not in the default channel list. The processor (7) uses the interface (5) to send the second channel list to the further device (21) and to receive a third channel list from the further device (21). The third channel list comprises at least one channel included in the second channel list. The processor (7) adds at least one channel included in the third channel list to the default channel list.

## Description

### Field of the invention

The invention relates to a device for receiving satellite channels.

The invention further relates to a method of receiving satellite channels.

The invention also relates to a computer program product enabling a programmable device to perform a method of receiving satellite channels.

### Background of the invention

Devices for receiving satellite channels often ask their users to perform a channel installation upon first use. An example of such a device is the Philips 49PUS7809/12 television. If the user wants to install satellite channels, this television allows a user to perform a Full installation or a Quick installation. If the user chooses to perform a Quick installation, only channels from a subscription package are installed. If the user chooses to perform a Full installation, a so-called "blind scan" is performed and all available channels are installed. In both cases, the installed channels are put in the default channel list (channel list "All").

A drawback of this satellite installation is that although a Full installation ensures that a user can find all available channels, many of those channels might not be interesting to the user, e.g. because they cannot be descrambled or because they are in a foreign language, and editing a large channel list on the device itself is often cumbersome.

### Summary of the invention

It is a first object of the invention to provide a device for receiving satellite channels, which enables a user to install all desired channels in an easier manner.

It is a second object of the invention to provide a method of receiving satellite channels, which enables a user to install all desired channels in an easier manner.

According to the invention, the first object is realized in that the device for receiving satellite channels comprises a receiver for tuning to a satellite channel, an interface for exchanging data with a further device, and a processor operative to use said receiver to scan transponders of at least one satellite for first channels with the help of transponder information and insert said first channels in a default channel list and to scan transponders of said at least one satellite for second channels without the help of transponder information and insert said second channels in a second channel list and not in said default channel list, to use said interface to send said second channel list to said further device and to receive a third channel list from said further device, said third channel list comprising at least one channel included in said second channel list, and to add at least one channel included in said third channel list to said default channel list.

By installing the channels (also referred to as "services") from the subscription package (using transponder information) into the default channel list, installing the channels from the "blind scan" into a separate list and allowing a user to select channels from this separate list for inclusion in the default channel list on a further device, preferably a tablet or a PC, the user can install all desired channels in an easier manner. PCs and tablets are much better suited to edit a large channel list than a typical device for receiving satellite channels, e.g. a television with a satellite receiver, due to their user interface.

In an embodiment, said transponder information comprises a plurality of entries, each entry comprising a frequency and a symbol rate. Preferably, this transponder information is obtained from one or more specific transponders called Homing Transponders which carry tuning parameter details for various transponders that constitute the subscription package. The tuning details of such Homing Transponder(s) can be pre-stored in the TV or can be derived from broadcasted signaling information, for example. Each entry may comprise further information in addition to said frequency and said symbol rate, e.g. a polarization indicator and/or an indicator of orbital position.

Said device may present at least a part of said default channel list when a user requests to view a channel list if said user has not previously activated a channel list other than said default channel list. The default channel list is the channel list that is active when a user first uses his device. Often, a user can create one or more other channel lists with a subset of channels of the default channel lists. These lists are often called favorite lists. After a favorite list has been activated, when a user requests to view a channel list, the activated favorite list will be shown. Additionally, the zap cycle may be limited to the channels in the activated favorite list.

Said processor may be operative to scan transponders of said at least one satellite for second channels without the help of transponder information when the device is in a standby state. Since a Full installation/blind scan normally takes a lot of time, this can advantageously be performed when the device is in a standby state, e.g. at night.

According to the invention, the second object is realized in that the method of receiving satellite channels comprises the steps of scanning transponders of at least one satellite for first channels with the help of transponder information in a device, inserting said first channels in a default channel list, scanning transponders of said at least one satellite for second channels without the help of transponder information in said device, inserting said second channels in a second channel list and not in said default channel list, sending said second channel list from said device to a further device, receiving a third channel list from said further device in said device, said third channel list comprising at least one channel included in said second channel list, and adding at least one channel included in said third channel list to said default channel list.

In an embodiment, said transponder information comprises a plurality of entries, each entry comprising a frequency and a symbol rate. The method may further comprise the step of presenting at least a part of said default channel list when a user requests to view a channel list if said user has not previously activated a channel list other than said default channel list. Scanning transponders of said at least one satellite for second channels without the help of transponder information may be performed when said device is in a standby state.

### Brief description of the Drawings

These and other aspects of the invention are apparent from and will be further elucidated, by way of example, with reference to the drawings, in which:
- Fig.1 is a flow diagram of the method of the invention; and
- Fig.2 is a block diagram of the device of the invention.

Corresponding elements in the drawings are denoted by the same reference numeral.

### Detailed description of the Drawings

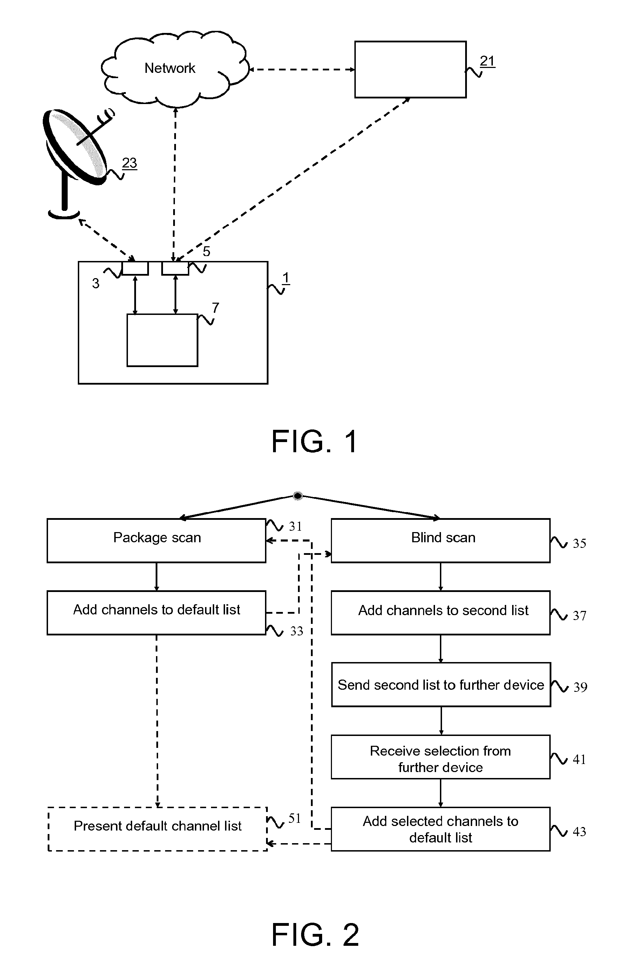

The device 1 for receiving satellite channels comprises a receiver 3 for tuning to a satellite channel, an interface 5 for exchanging data with a further device 21 and a processor 7, see Fig.1. The processor 7 is operative to use the receiver 3 to scan transponders of at least one satellite for first channels with the help of transponder information and insert the first channels in a default channel list and to scan transponders of the at least one satellite for second channels without the help of transponder information and insert the second channels in a second channel list and not in the default channel list. The transponder information comprises a plurality of entries that each comprise a frequency and a symbol rate, for example. The processor 7 is further operative to use the interface 5 to send the second channel list to the further device 21 and to receive a third channel list from the further device 21, the third channel list comprising at least one channel included in the second channel list. The processor 7 is also operative to add at least one channel included in the third channel list to the default channel list.

The processor 7 may be operative to scan transponders of the at least one satellite for second channels without the help of transponder information when the device 1 is in a standby state.

The device 1 may be a set top box, a PC accessory or a television, for example. The receiver 3 may work in conformance with the DVB-S(2) standard, for example. The receiver 3 may be connected to a satellite dish 23. The receiver 3 may be connected to more than one satellite dish. The interface 5 may be wired or wireless. The interface 5 may be a USB port or a WiFi transceiver, for example. The device 1 may communicate with the further device 21 directly, e.g. via a USB cable or direct Wifi connection, or may communicate with the further device 21 via a network, e.g. via a (wireless) LAN. The processor 7 may be a general-purpose processor or an application-specification processor, for example. When the device is a television, the processor 7 may be a System On a Chip (SoC) integrated circuit, for example. The device 1 may further comprise storage means for storing the transponder information. The further device 21 may be a tablet, smartphone or a PC, for example.

The method of receiving satellite channels comprises steps 31, 33, 35, 37, 39, 41 and 43, see Fig.2. Step 31 comprises scanning transponders of at least one satellite for first channels with the help of transponder information in a device. This transponder information (e.g. frequency, polarization, symbol rate, etc.) can be obtained from one or more specific transponders called Homing Transponders which carry tuning parameter details for various transponders that constitute the subscription package. The tuning details of such Homing Transponder(s) can be pre-stored in the TV, for example. Step 33 comprises inserting the first channels in a default channel list. Step 35 comprises scanning transponders of the at least one satellite for second channels without the help of transponder information in the device. Step 37 comprises inserting the second channels in a second channel list and not in the default channel list. Step 39 comprises sending the second channel list from the device to a further device. On the further device, a user can select desired channels from the second channel list, which will then be included in the third channel list and sent to the device.

On a PC, the user could use a large monitor and a mouse to conveniently browse through a large channel list. On a tablet, the user could use a touch screen to conveniently browse through a large channel list. Step 41 comprises receiving a third channel list from the further device in the device, the third channel list comprising at least one channel included in the second channel list. Step 43 comprises adding at least one channel included in the third channel list to the default channel list.

The method may further comprise a step 51. Step 51 comprises presenting at least a part of the default channel list when a user requests to view a channel list if the user has not previously activated a channel list other than the default channel list.

The method may be performed by a processor of a device for receiving satellite channels and/or by software (for) running on a processor of a device for receiving satellite channels.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage. 'Software' is to be understood to mean any software product stored on a computer-readable medium, such as a floppy disk, downloadable via a network, such as the Internet, or marketable in any other manner.

## Claims

1. A device (1) for receiving satellite channels, comprising:
- a receiver (3) for tuning to a satellite channel;
- an interface (5) for exchanging data with a further device (21); and
- a processor (7) operative:
to use said receiver to scan transponders of at least one satellite for first channels with the help of transponder information and insert said first channels in a default channel list and to scan transponders of said at least one satellite for second channels without the help of transponder information and insert said second channels in a second channel list and not in said default channel list;
to use said interface to send said second channel list to said further device and to receive a third channel list from said further device, said third channel list comprising at least one channel included in said second channel list; and
to add at least one channel included in said third channel list to said default channel list.

2. A device as claimed in claim 1, wherein said transponder information comprises a plurality of entries, each entry comprising a frequency and a symbol rate.

3. A device as claimed in claim 1 or 2, wherein said device presents at least a part of said default channel list when a user requests to view a channel list if said user has not previously activated a channel list other than said default channel list.

4. A device as claimed in any of claims 1 to 3, wherein said processor is operative to scan transponders of said at least one satellite for second channels without the help of transponder information when the device is in a standby state.

5. A method of receiving satellite channels, comprising the steps of:
- scanning (31) transponders of at least one satellite for first channels with the help of transponder information in a device;
- inserting (33) said first channels in a default channel list;
- scanning (35) transponders of said at least one satellite for second channels without the help of transponder information in said device;
- inserting (37) said second channels in a second channel list and not in said default channel list;
- sending (39) said second channel list from said device to a further device;
- receiving (41) a third channel list from said further device in said device, said third channel list comprising at least one channel included in said second channel list; and
- adding (43) at least one channel included in said third channel list to said default channel list.

6. A method as claimed in claim 5, wherein said transponder information comprises a plurality of entries, each entry comprising a frequency and a symbol rate.

7. A method as claimed in claim 5 or 6, further comprising the step of presenting (51) at least a part of said default channel list when a user requests to view a channel list if said user has not previously activated a channel list other than said default channel list.

8. A method as claimed in any of claims 5 to 7, wherein scanning transponders of said at least one satellite for second channels without the help of transponder information is performed when said device is in a standby state.

9. A computer program product enabling a programmable device to perform the method of any of claims 5 to 8.
